# EUROPÄISCHE PATENTSCHRIFT

(11) **EP 1 937 527 B1**
(45) Veröffentlichungstag und Bekanntmachung des Hinweises auf die Patenterteilung: **08.07.2009**
(21) Anmeldenummer: 06806081.3
(22) Anmeldetag: 06.10.2006
(51) Int. Cl.: B60T 8/00, B60T 17/22, F16D 65/78, B62B 3/06

(54) **MOBILFAHRZEUG MIT EINER ELEKTRISCHEN BETÄTIGUNGSEINRICHTUNG**
MOBILE VEHICLE COMPRISING AN ELECTRIC ACTUATION DEVICE
VEHICULE MOBILE DOTE D'UN DISPOSITIF DE COMMANDE ELECTRIQUE

(30) Priorität: 22.10.2005 DE 102005050740
(43) Veröffentlichungstag der Anmeldung: 02.07.2008
(73) Patentinhaber: ZF Friedrichshafen AG, 88038 Friedrichshafen (DE)
(72) Erfinder: SCHARFENBERG, Stephan, 99869 Tüttleben (DE); STUEBNER, Frank, 99894 Ernstroda (DE); HEINRICH, Kai, 88285 Bodnegg (DE)
(74) Vertreter: Gebhard, Wolfgang
(86) Internationale Anmeldenummer: PCT/EP2006/009673
(87) Internationale Veröffentlichungsnummer: WO 2007/045361

(56) Entgegenhaltungen:
- WO-A-95/15070
- DE-A1- 19 622 505
- JP-A- 2004 314 195
- US-A- 4 667 781

## Beschreibung

Die Erfindung betrifft ein Mobilfahrzeug mit einer elektrischen Betätigungseinrichtung nach der im Oberbegriff von Anspruch 1 näher definierten Art.

Die EP 0 999 081 A2 offenbart ein Mobilfahrzeug mit einer elektrischen Betätigungseinrichtung einer Bremse, bei welchem die Bremse beim Bestromen der Betätigungseinrichtung im Öffnungssinne betätigt wird, und beim Stromlosschalten der Betätigungseinrichtung die Bremse im Schließsinne mit Hilfe einer Feder betätigt wird. Verweilen derartige Fahrzeuge über einen längeren Zeitraum in einem Raum, dessen Temperatur unter dem Gefrierpunkt von Wasser ist, so besteht die Möglichkeit, dass beim Wechsel des Mobilfahrzeugs aus diesem Raum in eine andere Umgebung, in welcher eine höhere Temperatur besteht, Feuchtigkeit aus der Umgebungsluft an den kälteren Bauteilen kondensiert. Beim Zurückführen des Mobilfahrzeugs in den kalten Raum besteht die Möglichkeit, dass dieses Kondenswasser an den Bauteilen gefriert und somit beispielsweise die elektrisch betätigbare Bremse außer Funktion setzt. Dieser Vorgang kommt beispielsweise dann vor, wenn ein Handhubwagen im Kühlraum eines Kühltransporters während der Fahrt aufbewahrt wird, anschließend mit diesem Handhubwagen das Transportgut entladen wird und der Handhubwagen bei der Weiterfahrt wieder im Kühlraum verweilt.

Die DE 295 14 773 U1 offenbart ein Zubehörteil für einen Lastkraftwagen, mittels welchem der Handhubwagen außerhalb des Transportraumes des Lastkraftwagens aufbewahrt werden kann. Da der Handhubwagen dadurch beim Transport Umwelteinflüssen ausgesetzt ist, wird der Handhubwagen verschmutzt und ist für den Einsatz mit Lebensmitteln ungeeignet.

Die JP 2004 314 195 A offenbart ein Mobilfahrzeug mit einer elektrischen Betätigungseinrichtung einer Bremse und ein Verfahren zum Betrieb eines solchen Mobilfahrzeugs, wobei die Betätigungseinrichtung im bestromten Zustand, die Bremse im Öffnungssinne betätigt, wobei die elektrischen Betätigungseinrichtung so bestromt wird, dass sich diese über den Gefrierpunkt von Wasser erwärmt.

Der vorliegenden Erfindung liegt die Aufgabe zugrunde, ein Mobilfahrzeug mit einer elektrisch betätigbaren Bremse zu schaffen, welches auch in Räumen unterhalb des Gefrierpunkts von Wasser verwendet werden kann.

Die Aufgabe wird mit einem, auch die kennzeichnenden Merkmale des Hauptanspruchs aufweisenden, gattungsgemäßen Mobilfahrzeug gelöst.

Erfindungsgemäß weist das Mobilfahrzeug eine elektrische Betätigungseinrichtung auf, welche, zumindest zeitweise, so bestrombar ist, dass sich diese über dem Gefrierpunkt von Wasser erwärmt.

In einer weiteren Ausgestaltungsform der Erfindung wird die elektrische Betätigungseinrichtung der Bremse nur so bestromt, dass die Bremse geschlossen bleibt, die Betätigungseinrichtung aber erwärmt wird. Das Bestromen der Bremse ausschließlich zum Öffnen der Bremse, reicht für eine Erwärmung nicht aus, wodurch erfindungsgemäß die Bremse mit Wechselstrom beaufschlagt wird. Dieser Wechselstrom kann beispielsweise durch einen Wechselrichter, z. B. eine H-Brücke, erzeugt werden, wobei der Wechselrichter, vorzugsweise innerhalb des Mobilfahrzeugs, angeordnet ist. Damit die Bremse beim Bestromen nicht im Öffnungssinne betätigt wird, ist erfindungsgemäß die halbe Periodendauer des Wechselrichters kürzer als die Summe der mechanischen Zeitkonstanten der Bremse (Verzugszeit plus Anzugsdauer), wodurch ein Wechselstrom mit hohem Betrag verwendet werden kann, ohne dass die Bremse im Öffnungssinne betätigt wird.

In einer weiteren Ausgestaltungsform der Erfindung wird die elektromagnetische Bremse während des Transports des Mobilfahrzeugs, beispielsweise des Handhubwagens, im Kühltransporter bestromt. Um die Batterieladung des Mobilfahrzeugs, beispielsweise des Handhubwagens, nicht zu reduzieren, kann das Mobilfahrzeug an eine externe Spannungsversorgung, beispielsweise das 24-V-Bordnetz des Kühlfahrzeugs, zum Laden angeschlossen werden.

In einer weiteren Ausgestaltungsform der Erfindung weist das Mobilfahrzeug eine Diagnose-Funktion in der Antriebssteuerung auf, welche erkennt, ob die Spannung des externen Bordnetzes zum Laden der Batterie des Handhubwagens ausreicht.

Durch das Bestromen der elektrisch betätigbaren Bremse wird diese so erwärmt, dass ein Einfrieren, auch bei Verwendung in einem Raum mit einer Temperatur unterhalb des Gefrierpunkts von Wasser, ausbleibt.

Weitere Merkmale sind der Figuren-Beschreibung zu entnehmen. Es zeigen:
- Fig. 1: ein Mobilfahrzeug mit einer elektrischen Betätigungseinrichtung einer Bremse;
- Fig. 2: eine schematische Darstellung des elektrischen Anschlusses des Mobilfahrzeugs an eine externe Spannungsversorgung;

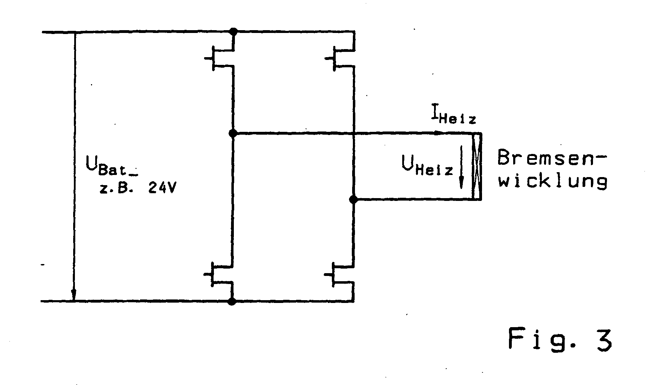

- Fig. 3: eine schematische Darstellung der elektrischen Betätigungseinrichtung und

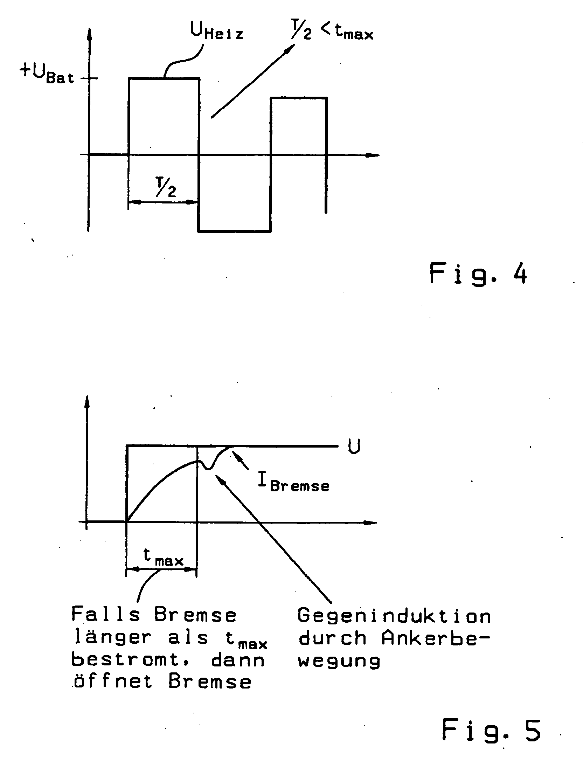

- Fig. 4: eine Darstellung der Periodendauer des Wechselrichters;
- Fig. 5: eine Darstellung beim Bestromen der Bremsen, wenn diese im Öffnungssinne betätigt werden sollen.

### Fig. 1:

Ein Handhubwagen 1 weist eine elektrisch betätigbare Bremse 2 auf. Diese Bremse ist als nicht gezeigte Magnetbremse, welche beim Bestromen im Öffnungssinne betätigbar und beim Stromlosschalten im Schließsinne betätigbar ist, ausgeführt. Der Handhubwagen kann neben der elektrisch betätigbaren Bremse einen elektrischen Antrieb und eine manuelle Lenkung aufweisen.

### Fig. 2:

Ein Lastkraftwagen, beispielsweise ein Kühltransporter 3, weist einen Generator 4 und eine Batterie 5 auf, welche als externe Spannungsquelle dienen. Mit dieser externen Spannungsquelle ist das Mobilfahrzeug 6 verbunden. Das Mobilfahrzeug 6 weist ein elektronische Steuerung 7 auf, welche unter anderem erkennt, ob das Mobilfahrzeug 6 über die Spannungsversorgungsleitungen mit dem KGhltransporter 3 verbunden ist, und ob ausreichend Ladespannung zur Verfügung steht. Wenn ausreichend Ladespannung zur Verfügung steht, wird die Batterie 8 des Mobilfahrzeugs geladen. Die elektronische Steuerung 7 ist mit der elektrischen Betätigungseinrichtung 9 der Bremse 2 verbunden und steuert die elektrische Betätigungseinrichtung 9 entweder zum Öffnen oder Schließen der Bremse oder zum Erwärmen der Bremse an. Wenn das Mobilfahrzeug 6 mit der Spannungsversorgung des Kühltransporters 3 verbunden ist und die Steuerung 7 erkennt, dass ausreichend Ladespannung vorhanden ist, wird die elektrische Betätigungseinrichtung 9 mit Wechselstrom aus einem Wechselrichter bestromt, um die Bremse zu erwärmen.

### Fig. 4:

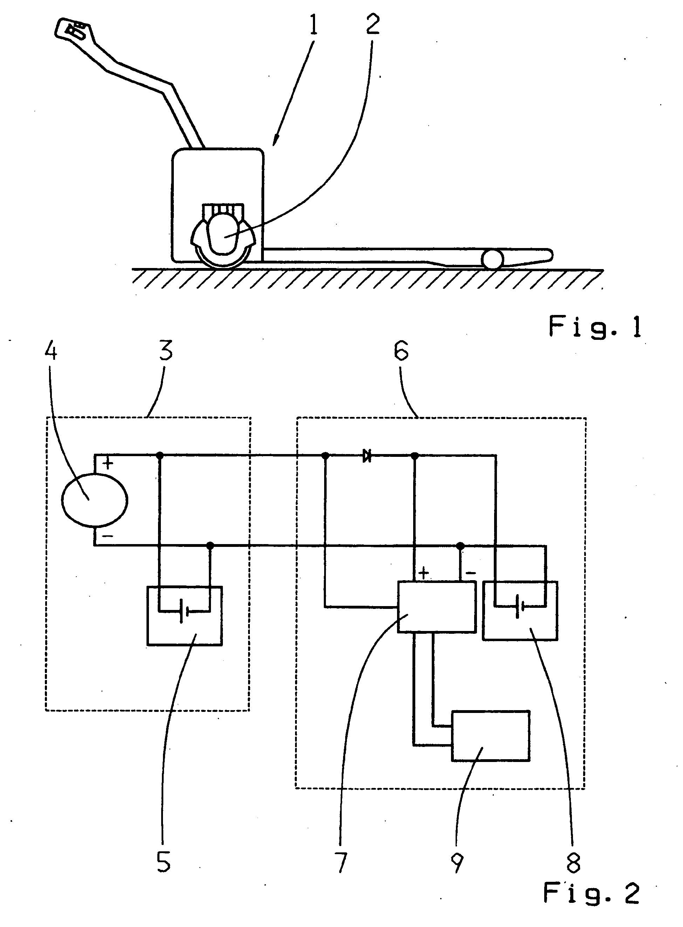

Die elektrische Betätigungseinrichtung 9 aus Fig. 2 wird mit einer Wechselspannung U_{Heiz} beaufschlagt, wobei die halbe Periodendauer ^{T}/₂ kürzer ist als die Summe der mechanischen Zeitkontanten der Bremse tₘₐₓ (Verzugszeit plus Anzugsdauer), wodurch die Richtung der Spannung wechselt, bevor die Bremse im Öffnungssinne betätigt ist. Dadurch bleibt die Bremse bei der Erwärmungsbestromung im Schließsinne betätigt.

### Fig. 3:

Die Bremswicklung der elektrisch betätigbaren Bremse wird von einem Wechselrichter mit I_{Heiz} bestromt, wodurch sich die Bremswicklung aufheizt.

### Fig. 5:

Soll die Bremse im Öffnungssinne betätigt werden, wird die Betätigungseinrichtung der Bremse mit der Spannung U beaufschlagt, wodurch nach der Zeit tₘₐₓ die Bremse beginnt, sich zu öffnen, was durch den Punkt sichtbar ist, bei welchem eine Gegeninduktion durch die Ankerbewegung stattfindet und die Bremse schließlich geöffnet ist.

### Bezugszeichen

- 1: Handhubwagen
- 2: Bremse
- 3: Kühltransporter
- 4: Generator
- 5: Batterie
- 6: Mobilfahrzeug
- 7: elektronische Steuerung
- 8: Batterie
- 9: elektrische Betätigungseinrichtung

## Patentansprüche

1. Mobilfahrzeug mit einer elektrischen Betätigungseinrichtung (9) einer Bremse (2), wobei die Betätigungseinrichtung (9) im bestromten Zustand die Bremse (2) im Öffnungssinne betätigt, wobei die elektrische Betätigungseinrichtung (9), zumindest zeitweise, so bestromt wird, dass sich diese über den Gefrierpunkt von Wasser erwärmt, **dadurch gekennzeichnet, dass** die Betätigungseinrichtung (9) mit Wechselstrom bestromt wird und die halbe Periodendauer (^{T}/₂) des Wechselstroms kürzer ist als die Summe der mechanischen Zeitkonstanten (tₘₐₓ) der Bremse (2).

2. Mobilfahrzeug mit einer elektrischen Betätigungseinrichtung (9) einer Bremse (2) nach Anspruch 1, **dadurch gekennzeichnet, dass** der Wechselstrom von einem Wechselrichter erzeugt wird.

3. Mobilfahrzeug mit einer elektrischen Betätigungseinrichtung (9) einer Bremse (2) nach Anspruch 1, **dadurch gekennzeichnet, dass** beim Bestromungsvorgang zum Erwärmen der Bremse die Bremse so bestromt wird, dass diese geschlossen bleibt.

4. Mobilfahrzeug mit einer elektrischen Betätigungseinrichtung (9) einer Bremse (2) nach Anspruch 1, **dadurch gekennzeichnet, dass** das Mobilfahrzeug (1, 6) mit einer externen Spannungsversorgung (3) verbindbar ist.

5. Mobilfahrzeug mit einer elektrischen Betätigungseinrichtung (9) einer Bremse (2) nach Anspruch 4, **dadurch gekennzeichnet, dass** die externe Spannungsversorgung (3) das Bordnetz eines Lastkraftwagens ist.

6. Mobilfahrzeug mit einer elektrischen Betätigungseinrichtung (9) einer Bremse (2) nach Anspruch 4, **dadurch gekennzeichnet, dass** das Mobilfahrzeug (1, 6) eine Steuerung (7) aufweist, welche erkennt, ob eine externe Spannungsversorgung (3) angeschlossen ist.

7. Mobilfahrzeug mit einer elektrischen Betätigungseinrichtung (9) einer Bremse (2) nach Anspruch 4, **dadurch gekennzeichnet, dass** das Mobilfahrzeug (1, 6) eine Steuerung (7) aufweist, welche erkennt, ob eine angeschlossene externe Spannungsversorgung (3) eine ausreichende Spannung liefert.

8. Verfahren zum Betrieb eines Mobilfahrzeugs mit einer elektrischen Betätigungseinrichtung (9) einer Bremse (2), wobei die Betätigungseinrichtung im bestromten Zustand die Bremse (2) im Öffnungssinne betätigt, wobei die elektrische Betätigungseinrichtung (9), zumindest zeitweise, so bestromt wird, dass sie sich über den Gefrierpunkt von Wasser erwärmt, **dadurch gekennzeichnet, dass** die Betätigungseinrichtung (9) mit Wechselstrom bestromt wird und die halbe Periodendauer (^{T}/₂) des Wechselstroms kürzer ist als die Summe der mechanischen Zeitkonstanten (tₘₐₓ) der Bremse (2).

9. Verfahren zum Betrieb eines Mobilfahrzeugs nach Anspruch 8 **dadurch gekenntzeichnet, dass** das Mobilfahrzeug (1, 6) sich zeitweise in einem unter dem Gefrierpunkt von Wasser aufweisenden Raum befindet, und die Betätigungseinrichtung (9) während des Aufenthalts in diesem Raum bestromt wird.

10. Verfahren zum Betrieb eines Mobilfahrzeugs nach Anspruch 8 **dadurch gekennzeichnet, dass** die Betätigungseinrichtung (9) während einer ausreichenden Spannungsversorgung durch eine externe Spannungsquelle (3) bestromt wird.

## Claims

1. Mobile vehicle having an electrical operating device (9) of a brake (2), with the operating device (9) operating the brake (2) so as to open it in the energized state, with the electrical operating device (9), at least temporarily, being energized such that it is heated to above the freezing point of water, **characterized in that** the operating device (9) is energized by alternating current, and half the period duration (T/2) of the alternating current is shorter than the sum of the mechanical time constants (tₘₐₓ) of the brake (2).

2. Mobile vehicle having an electrical operating device (9) of a brake (2) according to Claim 1, **characterized in that** the alternating current is generated by an inverter.

3. Mobile vehicle having an electrical operating device (9) of a brake (2) according to Claim 1, **characterized in that,** during the energization process for heating the brake, the brake is energized such that it remains closed.

4. Mobile vehicle having an electrical operating device (9) of a brake (2) according to Claim 1, **characterized in that** the mobile vehicle (1, 6) can be connected to an external voltage supply system (3).

5. Mobile vehicle having an electrical operating device (9) of a brake (2) according to Claim 4, **characterized in that** the external voltage supply system (3) is the on-board electrical system of a heavy goods vehicle.

6. Mobile vehicle having an electrical operating device (9) of a brake (2) according to Claim 4, **characterized in that** the mobile vehicle (1, 6) has a control system (7) which identifies whether an external voltage supply system (3) is connected.

7. Mobile vehicle having an electrical operating device (9) of a brake (2) according to Claim 4, **characterized in that** the mobile vehicle (1, 6) has a control system (7) which identifies whether a connected external voltage supply system (3) delivers an adequate voltage.

8. Method for operating a mobile vehicle having an electrical operating device (9) of a brake (2), with the operating device operating the brake (2) so as to open it in the energized state, with the electrical operating device (9), at least temporarily, being energized such that it is heated to above the freezing point of water, **characterized in that** the operating device (9) is energized by alternating current, and half the period duration (T/2) of the alternating current is shorter than the sum of the mechanical time constants (tₘₐₓ) of the brake (2).

9. Method for operating a mobile vehicle according to Claim 8, **characterized in that** the mobile vehicle (1, 6) is temporarily located in an area which is at a temperature below the freezing point of water, and the operating device (9) is energized while it is in this area.

10. Method for operating a mobile vehicle according to Claim 8, **characterized in that** the operating device (9) is energized by an external voltage source (3) when there is an adequate voltage supply.

## Revendications

1. Véhicule mobile comprenant un dispositif de commande électrique (9) d'un frein (2), le dispositif de commande (9) actionnant le frein (2) dans l'état alimenté en vue de l'ouvrir, le dispositif de commande électrique (9) étant alimenté en courant, au moins temporairement, de telle sorte qu'il se réchauffe au-dessus du point de congélation de l'eau, **caractérisé en ce que** le dispositif de commande (9) est alimenté en courant alternatif et la demi-période (T/2) du courant alternatif est plus courte que la somme des constantes de temps mécaniques (tₘₐₓ) du frein (2).

2. Véhicule mobile comprenant un dispositif de commande électrique (9) d'un frein (2) selon la revendication 1, **caractérisé en ce que** le courant alternatif est produit par un onduleur.

3. Véhicule mobile comprenant un dispositif de commande électrique (9) d'un frein (2) selon la revendication 1, **caractérisé en ce que** lors de l'opération d'alimentation en courant pour réchauffer le frein, le frein est alimenté en courant de telle sorte qu'il reste fermé.

4. Véhicule mobile comprenant un dispositif de commande électrique (9) d'un frein (2) selon la revendication 1, **caractérisé en ce que** le véhicule mobile (1, 6) peut être raccordé à une alimentation en tension externe (3).

5. Véhicule mobile comprenant un dispositif de commande électrique (9) d'un frein (2) selon la revendication 4, **caractérisé en ce que** l'alimentation en tension externe (3) est le réseau de bord d'un véhicule poids lourd.

6. Véhicule mobile comprenant un dispositif de commande électrique (9) d'un frein (2) selon la revendication 4, **caractérisé en ce que** le véhicule mobile (1, 6) présente une commande (7) qui reconnaît si une alimentation en tension externe (3) est raccordée.

7. Véhicule mobile comprenant un dispositif de commande électrique (9) d'un frein (2) selon la revendication 4, **caractérisé en ce que** le véhicule mobile (1, 6) présente une commande (7) qui reconnaît si une alimentation en tension externe (3) fournit une tension suffisante.

8. Procédé pour faire fonctionner un véhicule mobile comprenant un dispositif de commande électrique (9) d'un frein (2), dans lequel le dispositif de commande, dans l'état alimenté en courant, actionne le frein (2) en vue de l'ouvrir, le dispositif de commande électrique (9) étant parcouru par un courant, au moins temporairement, de telle sorte qu'il se réchauffe au-dessus du point de congélation de l'eau, **caractérisé en ce que** le dispositif de commande (9) est alimenté en courant alternatif et la demi-période (T/2) du courant alternatif est plus courte que la somme des constantes de temps mécaniques (tₘₐₓ) du frein (2).

9. Procédé pour faire fonctionner un véhicule mobile selon la revendication 8, **caractérisé en ce que** le véhicule mobile (1, 6) se trouve temporairement dans un espace se trouvant sous le point de congélation de l'eau, et le dispositif de commande (9) est alimenté en courant pendant son séjour dans cet espace.

10. Procédé pour faire fonctionner un véhicule mobile selon la revendication 8, **caractérisé en ce que** le dispositif de commande (9) est alimenté en courant pendant une alimentation en tension suffisante par une source de tension externe (3).
